# EUROPEAN PATENT SPECIFICATION

(11) **EP 4 264 082 B1**
(45) Date of publication and mention of the grant of the patent: **06.05.2026**
(21) Application number: 20853523.7
(22) Date of filing: 18.12.2020
(51) Int. Cl.: F16F 9/06

(54) **SHOCK ABSORBER**
STOSSDÄMPFER
AMORTISSEUR

(43) Date of publication of application: 25.10.2023
(73) Proprietor: Antonioni, Angelo, 52035 Monterchi, Frazione le Ville (IT)
(72) Inventor: Antonioni, Angelo, 52035 Monterchi, Frazione le Ville (IT)
(74) Representative: Modiano, Micaela Nadia
(86) International application number: PCT/IT2020/000084
(87) International publication number: WO 2022/130421

(56) References cited:
- US-A1- 2012 205 843
- US-A1- 2017 158 283
- US-A1- 2018 223 878
- US-B2- 7 513 490

## Description

The present invention relates to a shock absorber of the universal type, suitable for numerous and separate applications and extremely versatile.

Conventional shock absorbers, in particular those adapted for installation on vehicles of various nature and on industrial machinery, can be distinguished in terms of mechanical performance and behavior as a function of their response to external forces.

Shock absorbers are widespread which are intended for applications in which the stresses are not impulsive and have an intensity comprised within predefined ranges: these devices allow a slow and uniform stroke of the stem (with a high linear excursion thereof) which ensures corresponding movements of the chassis with which they are associated. For example, vehicles for road use fitted with this type of shock absorbers are comfortable and make it possible to minimize perception of irregularities on the road surface.

For applications where the stresses are impulsive and can have a very high level of intensity, "stiffer" shock absorbers are adopted, meaning that the damping of the stress is executed within a very short stroke and extremely rapidly. Again for the purposes of example, it should be noted that high-performance road vehicles adopt this type of shock absorbers.

The use is known of adjustable shock absorbers, for example using a control computer that modifies the elastic response, the damping, and the extent of the stroke, with which it is possible to decide in advance between a behavior geared to comfort and a behavior more appropriate for motor sports (and optional intermediate settings). In any case, with reference to the example of the road vehicle, these adjustable devices require the user to select a specific mechanical behavior of the suspension in advance and therefore, while the vehicle is in operation, the suspension will behave exactly like a specific type of shock absorber (favoring comfort or rigidity of vehicle stability).

The principal aim of the present invention is to solve the above-mentioned drawbacks by providing a shock absorber that is intrinsically versatile, i.e. that is adapted to provide the best response, both in terms of elasticity and in terms of damping, to external forces of widely varying intensity and duration.

Within this aim, an object of the invention is to provide a shock absorber that is easily adjustable.

Another object of the invention is to provide an active shock absorber.

Another object of the invention is to provide a shock absorber whose operation is based on physical phenomena that are partially different and universally avoided by conventional devices.

Another object of the invention is to provide a shock absorber with a structure that is relatively simple and extremely solid.

Another object of the invention is to provide a shock absorber with a structure that is resistant to malfunctions.

Another object of the present invention is to provide a shock absorber that is low-cost, easily and practically implemented and has competitive costs.

This aim and these and other objects which will become more apparent hereinafter are achieved by a shock absorber according to claim 1.

Further characteristics and advantages of the invention will become more apparent from the detailed description that follows of a preferred, but not exclusive, embodiment of the shock absorber, which is illustrated by way of non-limiting example in the accompanying drawings, wherein:
Figure 1 is a schematic perspective view of a possible embodiment of a shock absorber according to the invention in an extended configuration;
Figure 2 is a schematic perspective view of the shock absorber of Figure 1 in a compressed configuration;
Figure 3 is an enlarged view of a detail of Figure 2;
Figure 4 is a schematic perspective view of an additional embodiment of a shock absorber not according to the invention in a first extended configuration;
Figure 5 is a schematic perspective view of the shock absorber of Figure 3 in a compressed configuration;
Figure 6 is an enlarged view of a detail of Figure 5.

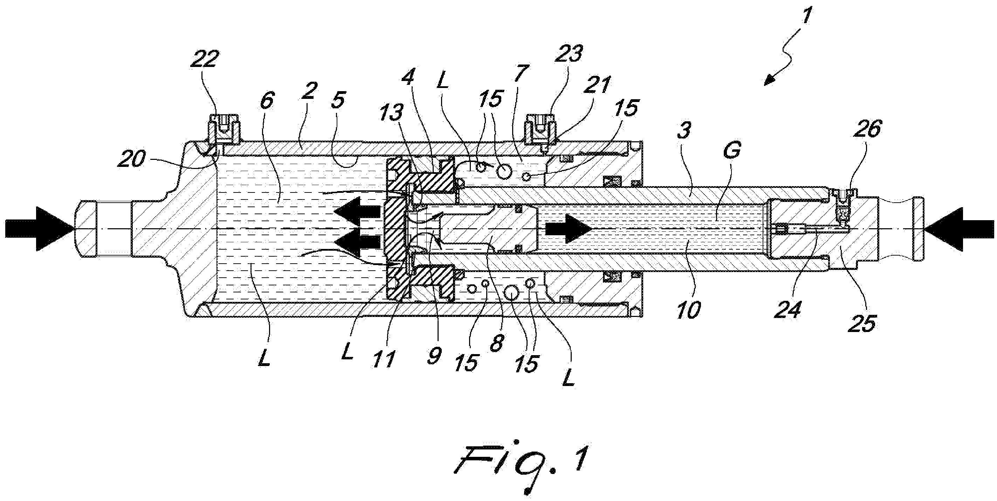

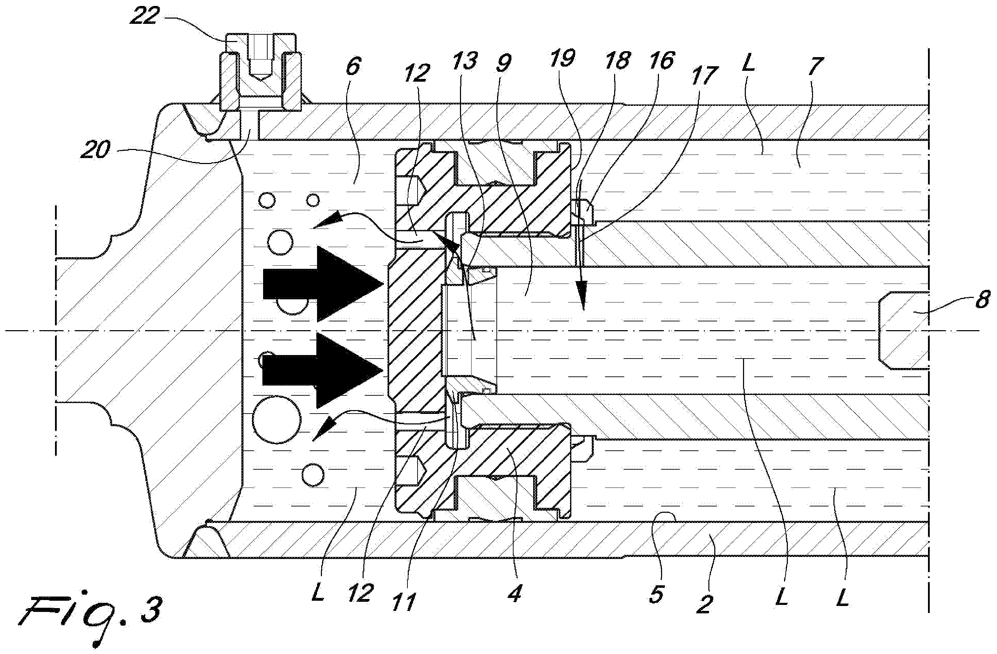

With reference to figures 1-3, the reference numeral 1 generally designates a shock absorber according to the invention.

The shock absorber 1 comprises a cylinder 2 inside which a plunger 3 can slide which is provided with a sealing head 4 which abuts, instantaneously, on an annular portion of the inner surface 5 of the cylinder 2 in order to divide the inner cavity of the cylinder 2 into two separate chambers 6, 7, both containing a working fluid L.

It should be noted that the working fluid will preferably be an oil for shock absorbers and/or an oil for hydraulic circuits, although the possibility is not ruled out of using other working fluids.

According to the invention, the plunger 3 comprises an inner space inside which a cursor 8 can slide hermetically in abutment, instantaneously, on an annular portion of the inner surface of the space, thus delimiting two separate cells 9, 10.

A first cell 9 contains working fluid, while a second cell 10 contains a gas G at a predefined pressure.

The sealing head 4 comprises at least one first one-way valve 11 and at least one respective transfer port 12 on the sealing head 4.

It should be noted that according to the invention the at least one first valve 11 can advantageously be provided with at least one flow-limiting hole 13 for the damping of oscillations.

Upon an impulsive compression of the plunger 3, with consequent reduction of the overall length of the entire shock absorber 1, the at least one first valve 11 will conveniently block the at least one transfer port 12, impeding the flow of working fluid L from the first chamber 6 to the first cell 9 through it. The passage of working fluid L will be permitted only through the at least one flow-limiting hole 13, with consequent rapid reduction of the pressure inside the second chamber 7 (the shift of the sealing head 4 toward the bottom of the cylinder 2 entails an increase of the volume of the chamber 7, without working fluid L being able to enter the chamber in order to occupy the space corresponding to the increase in volume), even to the point of cavitation of part of the working fluid L accommodated therein (cavitation is a phenomenon consisting of the formation of areas of vapor 14 of fluid L inside the working fluid L), until the impulsive compression ceases.

It is important to note that the at least one first valve 11 comprises a main body that translates along the inner surface of the compartment (which in turn is inside the plunger 3) proximate to the sealing head 4.

The main body of the valve 11 is advantageously slideable between a first position of abutment against the end wall of the sealing head 4, in which it blocks the transfer ports 12 and the flow of working fluid L from the first cell 9 to the first chamber 6 is possible only through the limiting hole 13, and a second position at a predefined distance from the end wall of the sealing head 4 in which the transfer ports 12 are free and the flow of working fluid L occurs through them from the first cell 9 to the first chamber 6 and vice versa.

With particular reference to an embodiment of undoubted practical and applicative interest, the at least one flow-limiting hole 13 can positively be constituted by at least one through channel which is calibrated on the main body of the at least one first valve 11 for the passage of a predefined maximum flow rate of the working fluid L from the first chamber 6 to the first cell 9.

It should furthermore be noted that between the first cell 9 of the inner space inside the plunger 3 and the second chamber 7 of the cylinder 2 there can advantageously be at least one second one-way valve 16 which faces at least one respective second transfer port 17 defined on a side wall of the plunger 3.

This second valve 16 can also advantageously comprise at least one flow-limiting channel 18.

It should be noted that the at least one second valve 16 also comprises a main element that translates along the sealing head 4 (in this case one of the lips 19 thereof that protrude with respect to the outer surface of the plunger 3) proximate to the outer side wall of the plunger 4.

The main element of the second valve 16 is conveniently slideable between a first position of abutment against the side wall of the plunger 3, in which it blocks the second transfer ports 17 and, therefore, the flow of working fluid L from the first cell 9 to the second chamber 7 is possible only through the limiting channel 18, and a second position at a predefined distance from the side wall of the plunger 3 in which the second transfer ports 17 are free and the flow of working fluid L occurs through them from the first cell 9 to the first chamber 7 and vice versa.

It should furthermore be noted that the cylinder 2 comprises, along its lateral surface, at least one first through opening 20 at the first chamber 6 and a second through opening 21 at the second chamber 7.

The first opening 20 and the second opening 21 can advantageously be coupled to components that are chosen from among stopper plugs 22 and 23 and conduits of an external hydraulic circuit.

If the openings 20 and 21 are connected to the external hydraulic circuit, it should be noted that the connection will need to comprise a reservoir of working fluid L and at least one pump for the conveyance of working fluid L through the respective conduits into the chambers 6, 7 of the cylinder 2.

The pump will in such case be controlled by a respective control and management unit for the automatic control of the conveyance (meaning the flow rate, pressure, speed of the flow) of working fluid L, with consequent adjustment, discrete or continuous, of the excursion (maximum translation of the plunger 3 with respect to the cylinder 2) and of the position of equilibrium (which depends on the volume of the chamber 6 and of the chamber 7) of the shock absorber 1.

By virtue of the adoption of the external hydraulic circuit it will be possible to use the shock absorber 1 as an active shock absorber, indicated for all those specific applications that require the capacity to vary the parameters and characteristics of the shock absorber 1 itself.

It should furthermore be noted that on the end wall of the second cell 10 of the inner space inside the plunger 3 there can usefully be a passage duct 24 for the gas G, for the purpose of enabling the adjustment of the pressure of the gas G inside the second cell 10.

The adjustment of such pressure will effectively determine a calibration of the shock absorber 1 in terms of rigidity and of elastic response.

In more detail, it should be noted that the plunger 3 can advantageously comprise an end plug 25 for hermetic closure, which defines the end wall of the cell 10.

The passage duct 24 will be defined inside the end plug 25 and will comprise at least one element 26 for the respective hermetic closure (in the accompanying figures the element 26 is represented as a threaded plug).

With particular reference to a possible embodiment of undoubted applicative interest in the sector of terrestrial vehicles, it should be noted that the shock absorber 1 can also advantageously comprise a control and management unit.

Such control and management unit can be conveniently connected to respective sensors for monitoring the road surface, to at least one compressor for the adjustment of the pressure of the gas G in the second cell 10 and to at least one pump for the adjustment of the instantaneous quantity of fluid L present in the first chamber 6 and in the second chamber 7.

In practice the control and management unit can therefore adjust the pressure of the gas G in the second cell 10 and the quantity of working fluid L in the chambers 6, 7 as a function of the signals detected by the sensors for monitoring the road surface for the predictive adjustment of the stroke, of the elastic response and of the damping of the shock absorber 1.

The damped actuator 1 of the "plunger" type has an excellent braking effect, being particularly adapted for all wheeled vehicles, in that it has a damping effect in compression and a braking effect in extension. In addition, if it is connected to a suitable external hydraulic circuit, the shock absorber 1 can function as an active suspension.

In any case, the shock absorber 1 according to the invention, in relation to the violence/suddenness of the overloads, will have a different cushioning reaction.

A version of the shock absorber 1 can be provided which has a through hole 17 between the first cell 9 and the second chamber 7 (where the second one-way valve 16 will be installed) or without such hole (according to the specific type of operation required).

The presence of the two openings 20 and 21 further makes it possible to characterize the shock absorber 1 according to two separate operating modes: if the openings 20 and 21 are closed hermetically with the stopper plugs 22 and 23 the shock absorber 1 will behave like a stable shock absorber; but if the openings 20 and 21 are connected to an external hydraulic circuit, the shock absorber 1 will be able to function like an active suspension.

The working gas G can be any type, although the adoption of nitrogen is specifically envisaged (in an embodiment of undoubted practical interest), in view of the ease with which it is sourced, combined with an excellent chemical inertia compared to the other substances and materials in use.

It should furthermore be noted that the first valve 11 (and also the second valve 16) are one-way depression valves with anti-slewing function: slewing is to be understood to be the tendency of a shock absorber to move according to a damped harmonic motion, and reduction of slewing can therefore be obtained by increasing the damping of the oscillations.

The cells 9 and 10 and the slideable cursor 8 ensure an elastic response in that the shock absorber 1, for a certain portion of its stroke, can behave like a gas-operated spring.

It should furthermore be noted that, since typically the dissipation of the overload occurs in a few tenths of a second, and since the second chamber 7, in expansion, is fed exclusively with the working fluid L through the second transfer ports 17 which limit the flow rate of liquid, it is possible that the second chamber 7 will not be filled completely with working fluid L in the compression stroke (especially if it is impulsive) and a phenomenon of cavitation (the formation of bubbles of vapor 15 of fluid L) arises which is essential for enabling the shock absorber 1 to complete its dissipation stroke without interfering with the correct movement of the plunger 3.

Cavitation happens only when the overload is impulsive (it happens very quickly) and the second transfer ports 17 do not allow a sufficient influx of working fluid L to the second chamber 7. If, on the other hand, the overload is slow, the phenomenon of cavitation may be absent or of minimal extent. If the second transfer port 17 is of ample dimensions or if there are even multiple second transfer ports 17, the ensured flow of working fluid L will be sufficient to fill the second chamber 7 and no cavitation will arise.

The two openings 20 and 21 (which are connected respectively with the first chamber 6 and the second chamber 7) can also be connected (instead of the plugs 22 and 23) to adapted measurement instruments (pressure switches) for monitoring the pressures and the cavitation episodes that arise inside the chambers 6 and 7 at the moment of overload and in the subsequent step of dissipation: on the basis of the data detected by the pressure switches it is possible to calibrate the flow-limiting hole 13 (or holes 13, if there are two or more thereof) in order to obtain the reaction necessary for an optimal required damping.

In practice therefore each shock absorber 1 can be designed and built to meet in the ideal manner the specific requirements of the application (vehicle on wheels, industrial apparatus, etc.) in which it will be installed.

The shock absorber 1, therefore, reacts as a consequence to the forces applied: the more violent and sudden the overload (bump) is, the stiffer and more reactive the shock absorber will be, presenting a shorter excursion; by contrast, the slower the application of the overload is, the softer the movement of the shock absorber1 will be and, therefore, the longer the excursion will be.

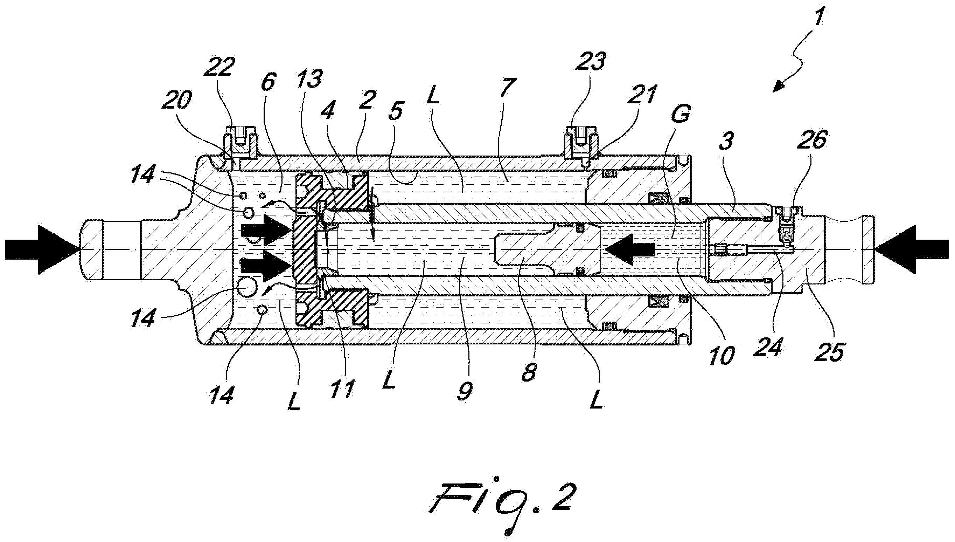

When the compression step of damping (Figure 2) is finished, the fraction of working fluid 1 that has flowed into the second chamber 7 will return to the cell 9, passing through the limiting channel 18 of the second valve 16 and the second transfer ports 17. Then, from the first cell 9, through the one-way valve 11 (passing through the limiting hole 13 of that valve 11, which limits the flow rate and makes it possible to control the effect of the recoil until the cursor 8 arrives at its position of equilibrium) the working fluid will reach the first chamber 6.

The gas G repels the cursor 8 with the same energy accumulated during the compression; the one-way valves 11 and 16 close the respective transfer ports (respectively 12 and 17) and allow the working fluid L to pass from the second chamber 7 to the first chamber 6 only through the limiting hole 13 and the limiting channel 18, slowing the outflow and dissipating the energy as heat.

The presence of the second one-way valve 16 with limiting hole 18 controls the outflow of the working fluid L from the second chamber 7 to the first chamber 6 (through the cell 9): this makes it possible to control the outward stroke of the shock absorber 1, typically when the wheel loses contact with the ground.

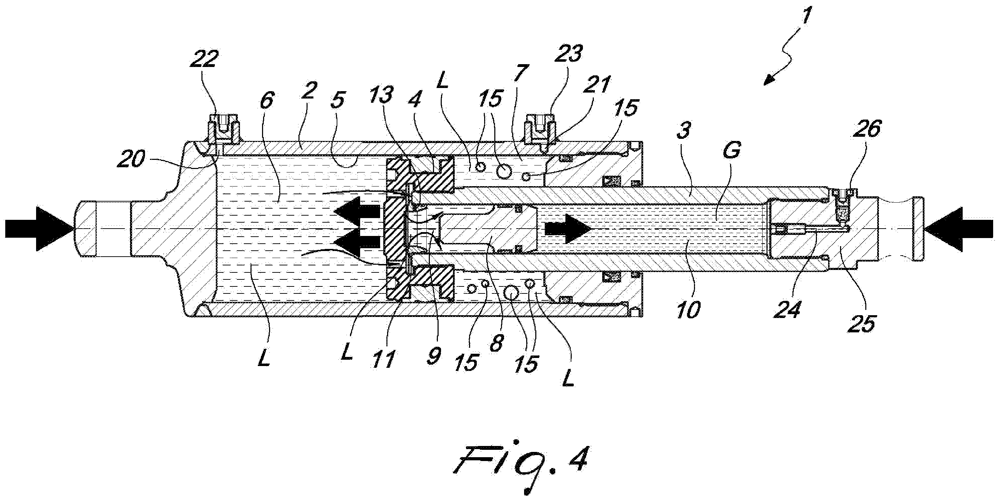

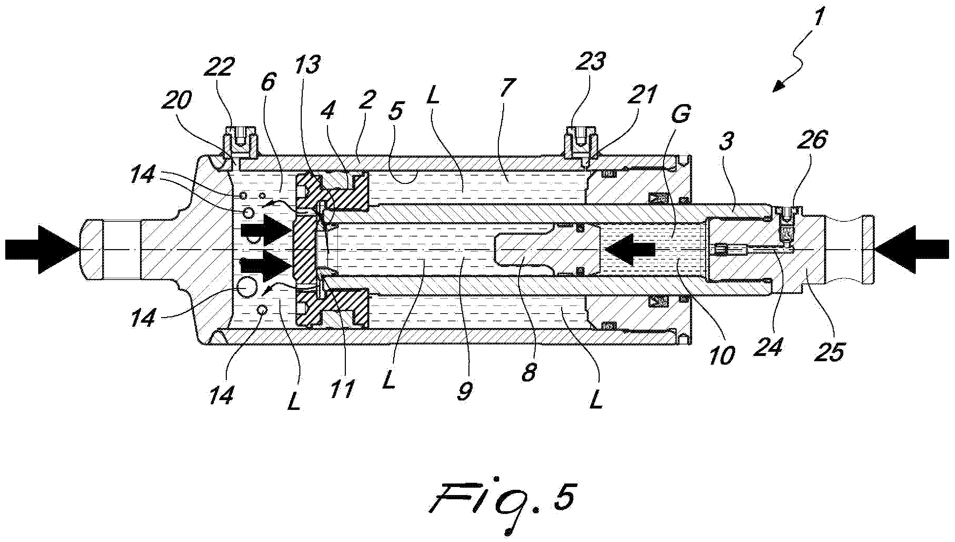

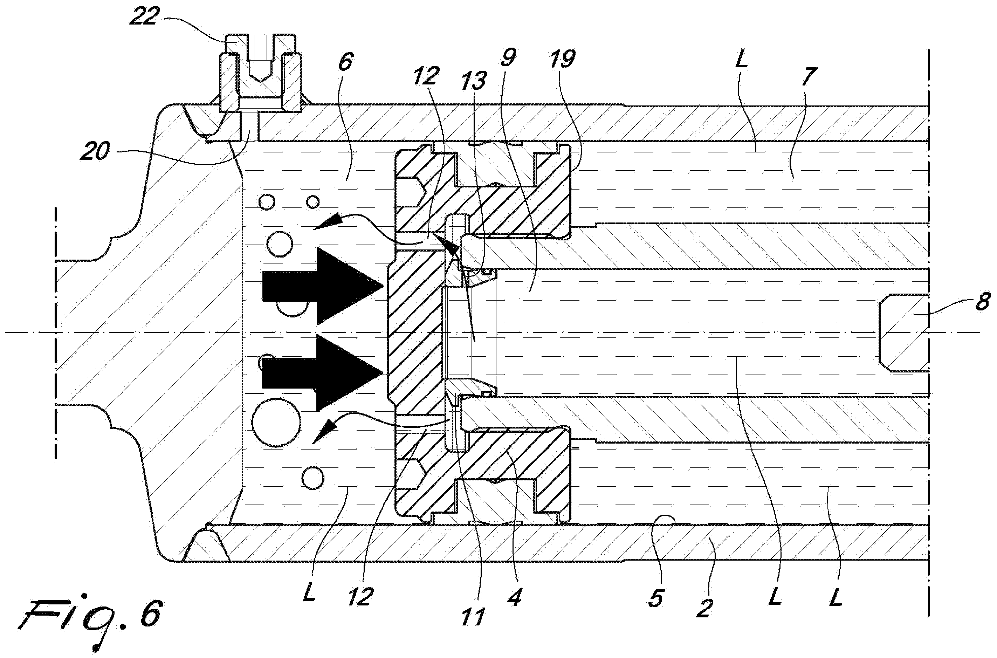

In the embodiment shown by way of example in the accompanying Figures 4, 5 and 6 the shock absorber 1 is configured as a double-acting cylinder without channel systems for connection between the first cell 9 and the second chamber 7 (the shock absorber 1 will therefore behave like a conventional double-acting cylinder): the particular shape structure will still ensure a very reactive damping, capable of supporting small and heavy loads with a limited excursion of the damping stroke; the first cell 9 in fact receives a minimal quantity of working fluid L flowing in from the first chamber 6 and this ensures that the damping stroke is limited by the ratio of the volumes of the cell 9 and of the chamber 6. This embodiment meets the requirements of heavy loads and limited excursions, but achieves an excellent damping precisely by virtue of the presence of the first one-way valve 11 with the limiting hole 13 (which minimizes slewing, i.e. by damping the oscillations following a sudden external load).

Advantageously, the present invention solves the problems shown above, by providing a shock absorber 1 that is intrinsically versatile, i.e. that is adapted to provide the best response, both in terms of elasticity and in terms of damping, to external forces of widely varying intensity and duration.

Conveniently the shock absorber 1 according to the invention is easily adjustable and therefore adapted to any application.

Advantageously the shock absorber 1 according to the invention can also be used as an active shock absorber, and therefore is also suitable for special applications and/or for applications with heavy-duty operating requirements.

Positively the operation of the shock absorber 1 according to the invention is based on physical phenomena that are partially different and universally avoided by conventional devices: cavitation is in fact a phenomenon that has always been avoided, through a specific design, in conventional shock absorbers.

Advantageously the shock absorber 1 according to the invention has a structure that is relatively simple and extremely solid.

Positively the shock absorber 1 according to the invention has a structure that is resistant to malfunctions.

Positively the shock absorber 1 according to the invention is easily and practically implemented and is low-cost: such characteristics make the shock absorber 1 according to the invention an innovation that is safe in use.

The invention thus conceived is susceptible of numerous modifications and variations, all of which are within the scope of the appended claims.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A shock absorber of the type comprising a cylinder (2) inside which a plunger (3) can slide which is provided with a sealing head (4) which abuts, instantaneously, on an annular portion of the inner surface (5) of said cylinder (2) in order to divide the inner cavity of said cylinder (2) into two separate chambers (6, 7) both containing a working fluid (L), said plunger (3) comprising an inner space inside which a cursor (8) can slide hermetically in abutment, instantaneously, on an annular portion of the inner surface of said space, thus delimiting two separate cells (9, 10), a first cell (9) containing said working fluid (L) and a second cell (10) containing a gas (G) at a predefined pressure,
said sealing head (4) comprising at least one first one-way valve (11) and at least one respective transfer port (12) on said sealing head (4), said at least one first valve (11) being provided with at least one flow-limiting hole (13) for the damping of oscillations,
upon an impulsive compression of said plunger (3), with consequent reduction of the overall length of said shock absorber (1), said at least one first valve (11) blocking said at least one transfer port (12), impeding the flow of working fluid (L) from said first chamber (6) to said first cell (9) through it and allowing said flow only through said at least one flow-limiting hole (13), with consequent rapid reduction of the pressure inside said second chamber (7) even to the point of cavitation of part of said working fluid (L) accommodated therein, until the impulsive compression ceases,
**characterized in that** between said first cell (9) of said inner space and said second chamber (7) of said cylinder (2) there is at least one second one-way valve (16) which faces at least one respective second transfer port (17) defined on a side wall of said plunger (3), said valve (16) comprising at least one flow-limiting channel (18),
and **in that** said at least one second valve (16) comprises a main element that translates along the sealing head (4) proximate to the outer side wall of said plunger (3), said main element being slideable between a first position of abutment against said side wall of said plunger (3), in which it blocks said second transfer ports (17) and the flow of working fluid (L) from said first cell (9) to said second chamber (7) is possible only through said limiting channel (18), and a second position at a predefined distance from said side wall of said plunger (3) in which said second transfer ports (17) are free and the flow of working fluid occurs through them from said first cell (9) to said second chamber (7) and vice versa.

2. The shock absorber according to claim 1, **characterized in that** said at least one first valve (11) comprises a main body that translates along the inner surface of said space proximate to the sealing head (4), said main body being slideable between a first position of abutment against an end wall of said sealing head (4), in which it blocks said transfer ports (12) and the flow of working fluid (L) from said first cell (9) to said first chamber (6) is possible only through said limiting hole (13), and a second position at a predefined distance from said end wall of said head (4) in which the transfer ports (12) are free and the flow of working fluid (L) occurs through them from said first cell (9) to said first chamber (6) and vice versa.

3. The shock absorber according to claim 1, **characterized in that** said at least one flow-limiting hole (13) is constituted by at least one through channel which is calibrated on the body of said at least one first valve (11) for the passage of a predefined maximum flow rate of said working fluid (L) from said first chamber (6) to said first cell (9).

4. The shock absorber according to claim 1, **characterized in that** said cylinder (2) comprises, along its lateral surface, at least one first through opening (20) at said first chamber (6) and a second through opening (21) at said second chamber (7), said first opening (20) and said second opening (21) being coupled to components that are chosen from among stopper plugs (22, 23) and conduits of an external hydraulic circuit.

5. The shock absorber according to claim 4, **characterized in that** said external hydraulic circuit comprises a reservoir of working fluid (L) and at least one pump for the conveyance of working fluid (L), through the respective conduits into said chambers (6, 7) of said cylinder (2), said pump being controlled by a respective control and management unit for the automatic control of said conveyance of working fluid (L), with consequent adjustment, discrete or continuous, of the excursion and position of equilibrium of said shock absorber (1).

6. The shock absorber according to claim 1, **characterized in that** on the end wall of said second cell (10) of said inner space of said plunger (3) there is a passage duct (24) for said gas (G) for the adjustment of the pressure of said gas (G) in said second cell (10).

7. The shock absorber according to claim 6, **characterized in that** said plunger (3) comprises an end plug (25) for hermetic closure which defines said end wall, said passage duct (24) being defined inside said end plug (25) and comprising at least one element (26) for the respective hermetic closure.

8. The shock absorber according to one or more of the preceding claims, **characterized in that** it comprises a control and management unit which is connected to:
- respective sensors for monitoring the road surface,
- at least one compressor for the adjustment of the pressure of the gas (G) in said second cell (10),
- at least one pump for the adjustment of the instantaneous quantity of working fluid (L) present in said first chamber (6) and in said second chamber (7),
said control and management unit adjusting the pressure of said gas (G) in said second cell (10) and the quantity of working fluid (L) in said chambers (6, 7) as a function of signals detected by said sensors for monitoring the road surface, for the predictive adjustment of the stroke, of the elastic response and of the damping of said shock absorber (1).

## Patentansprüche

1. Ein Stoßdämpfer von der Art, die einen Zylinder (2) umfasst, in dem ein Plunger (3) gleiten kann, der mit einem Abdichtkopf (4) versehen ist, welcher sofort an einem ringförmigen Abschnitt der inneren Oberfläche (5) des Zylinders (2) anliegt, um den inneren Hohlraum des Zylinders (2) in zwei separate Kammern (6, 7) zu unterteilen, die beide ein Arbeitsfluid (L) enthalten; wobei der Plunger (3) einen Innenraum umfasst, in dem ein Schieber (8) hermetisch in sofortigem Anliegen an einem ringförmigen Abschnitt der inneren Oberfläche des Raums gleiten kann, wodurch zwei separate Zellen (9, 10) begrenzt werden, eine erste Zelle (9), die das Arbeitsfluid (L) enthält, und eine zweite Zelle (10), die ein Gas (G) mit vordefiniertem Druck enthält,
wobei der Abdichtkopf (4) mindestens ein erstes Einwegventil (11) und mindestens einen entsprechenden Transferanschluss (12) an dem Abdichtkopf (4) umfasst, wobei das mindestens eine erste Ventil (11) mit mindestens einer Strömungsbegrenzungsöffnung (13) zum Dämpfen von Schwingungen versehen ist,
wobei das mindestens eine erste Ventil (11) bei einer Stoß-Kompression des Plungers (3), mit daraus folgender Reduktion der Gesamtlänge des Stoßdämpfers (1), den mindestens einen Transferanschluss (12) blockiert und so den Strom des Arbeitsfluids (L) von der ersten Kammer (6) zu der ersten Zelle (9) dadurch behindert und den Strom nur durch die mindestens eine Strombegrenzungsöffnung (13) gestattet, mit sich daraus ergebender schneller Minderung des Drucks innerhalb der zweiten Kammer (7), selbst bis zum Punkt der Kavitation eines Teils des darin aufgenommenen Arbeitsfluids (L), bis die Stoß-Kompression nachlässt; **dadurch gekennzeichnet, dass** sich zwischen der ersten Zelle (9) des Innenraums und der zweiten Kammer (7) des Zylinders (2) mindestens ein zweites Zwei-Wege-Ventil (16) befindet, welches mindestens einem entsprechenden zweiten Transferanschluss (17) zugewandt ist, der an einer Seitenwand des Plungers (3) bestimmt ist, wobei das Ventil (16) mindestens einen Flussbegrenzungskanal (18) umfasst, und dadurch, dass das mindestens eine zweite Ventil (16) ein Hauptelement umfasst, das eine Translationsbewegung entlang dem Abdichtkopf (4) angrenzend an die äußere Seitenwand des Plungers (3) durchführt, wobei das Hauptelement verschiebbar ist zwischen einer ersten Position des Anliegens an der Seitenwand des Plungers (3), in der es die zweiten Transferanschlüsse (17) blockiert und der Strom des Arbeitsfluids (L) von der ersten Zelle (9) zu der zweiten Kammer (7) nur durch den Begrenzungskanal (18) möglich ist, und einer zweiten Position in einem vordefinierten Abstand von der Seitenwand des Plungers (3), in welcher die zweiten Transferanschlüsse (17) frei sind und der Strom von Arbeitsfluid durch sie von der ersten Zelle (9) zu der zweiten Kammer (7) und umgekehrt stattfindet.

2. Der Stoßdämpfer gemäß Anspruch 1, **dadurch gekennzeichnet, dass** das mindestens eine erste Ventil (11) einen Hauptkörper umfasst, der eine Translationsbewegung entlang der inneren Oberfläche des Raums angrenzend an den Abdichtkopf (4) durchführt, wobei der Hauptkörper verschiebbar ist zwischen einer ersten Position des Anliegens an einer Endwand des Abdichtkopfs (4), in welcher er die Transferanschlüsse (12) blockiert und der Strom von Arbeitsfluid (L) von der ersten Zelle (9) zu der ersten Kammer (6) nur durch die Begrenzungsöffnung (13) möglich ist, und einer zweiten Position in einem vordefinierten Abstand von der Endwand des Kopfs (4), in welcher die Transferanschlüsse (12) frei sind und der Strom von Arbeitsfluid (L) durch sie von der ersten Zelle (9) zu der ersten Kammer (6) und umgekehrt stattfindet.

3. Der Stoßdämpfer gemäß Anspruch 1, **dadurch gekennzeichnet, dass** die mindestens eine Strombegrenzungsöffnung (13) in mindestens einem Durchgangskanal besteht, der auf dem Körper des mindestens einen ersten Ventils (11) für den Durchlauf einer vordefinierten maximalen Strömungsrate des Arbeitsfluids (L) von der ersten Kammer (6) zu der ersten Zelle (9) kalibriert ist.

4. Der Stoßdämpfer gemäß Anspruch 1, **dadurch gekennzeichnet, dass** der Zylinder (2) entlang seiner Seitenfläche mindestens eine erste Durchgangsöffnung (20) an der ersten Kammer (6) und eine zweite Durchgangsöffnung (21) an der zweiten Kammer (7) umfasst, wobei die erste Öffnung (20) und die zweite Öffnung (21) mit Komponenten gekoppelt sind, die gewählt sind aus Stopfen (22, 23) und Leitungen eines externen Hydraulikkreislaufs.

5. Der Stoßdämpfer gemäß Anspruch 4, **dadurch gekennzeichnet, dass** der externe Hydraulikkreislauf einen Behälter mit Arbeitsfluid (L) und mindestens eine Pumpe zur Beförderung von Arbeitsfluid (L) durch die jeweiligen Leitungen in die Kammern (6, 7) des Zylinders (2) umfasst, wobei die Pumpe von einer entsprechenden Steuerungs- und Verwaltungseinheit für die automatische Kontrolle der Beförderung des Arbeitsfluids (L) gesteuert ist, mit daraus folgender diskreter oder stufenloser Einstellung der Auslenkung und Gleichgewichtslage des Stoßdämpfers (1).

6. Der Stoßdämpfer gemäß Anspruch 1, **dadurch gekennzeichnet, dass** sich an der Endwand der zweiten Zelle (10) des Innenraums des Plungers (3) eine Durchgangsleitung (24) für das Gas (G) zur Druckanpassung des Gases (G) in der zweiten Zelle (10) befindet.

7. Der Stoßdämpfer gemäß Anspruch 6, **dadurch gekennzeichnet, dass** der Plunger (3) einen Endstöpsel (25) zum hermetischen Verschließen umfasst, der die Endwand bestimmt, wobei die Durchgangsleitung (24) in dem Endstöpsel (25) bestimmt ist und mindestens ein Element (26) für den entsprechenden hermetischen Verschluss umfasst.

8. Der Stoßdämpfer gemäß einem oder mehreren der obigen Ansprüche, **dadurch gekennzeichnet, dass** er eine Steuerungs- und Verwaltungseinheit umfasst, die verbunden ist mit:
- ensprechenden Sensoren zur Überwachung der Straßenoberfläche,
- mindestens einem Kompressor zur Druckanpassung des Gases (G) in der zweiten Zelle (10),
- mindestens eine Pumpe zur Anpassung der unmittelbaren Menge an Arbeitsfluid (L) in der ersten Kammer (6) und in der zweiten Kammer (7),
wobei die Steuerungs- und Verwaltungseinheit den Druck des Gases (G) in der zweiten Zelle (10) und die Menge an Arbeitsfluid (L) in den Kammern (6, 7) als Funktion der Signale anpasst, die von den Sensoren zur Überwachung der Straßenoberfläche erfasst werden, zur Anpassung des Hubs, der elastischen Reaktion und der Dämpfung des Stoßdämpfers (1) nach Voraussage.

## Revendications

1. Amortisseur du type comprenant un cylindre (2) à l'intérieur duquel peut coulisser un piston (3) muni d'une tête d'étanchéité (4) qui vient buter instantanément sur une partie annulaire de la surface intérieure (5) dudit cylindre (2) afin de diviser la cavité intérieure dudit cylindre (2) en deux chambres distinctes (6, 7) contenant toutes deux un fluide de travail (L), ledit piston (3) comprenant un espace intérieur à l'intérieur duquel un curseur (8) peut coulisser hermétiquement en butée, instantanément, sur une partie annulaire de la surface intérieure dudit espace, délimitant ainsi deux cellules séparées (9, 10), une première cellule (9) contenant ledit fluide de travail (L) et une deuxième cellule (10) contenant un gaz (G) à une pression prédéfinie,
ladite tête d'étanchéité (4) comprenant au moins une première soupape unidirectionnelle (11) et au moins un orifice de transfert respectif (12) sur ladite tête d'étanchéité (4), ladite au moins une première soupape (11) étant pourvue d'au moins un trou limitant le débit (13) pour l'amortissement des oscillations,
lors d'une compression impulsive dudit piston (3), avec pour conséquence une réduction de la longueur totale dudit amortisseur (1), ladite au moins une première soupape (11) bloquant ledit au moins un orifice de transfert (12), empêchant l'écoulement du fluide de travail (L) de ladite première chambre (6) vers ladite première cellule (9) à travers celui-ci et permettant ledit écoulement uniquement à travers ledit au moins un trou limitant le débit (13), avec pour conséquence une réduction rapide de la pression à l'intérieur de ladite deuxième chambre (7) jusqu'à la cavitation d'une partie dudit fluide de travail (L) qui s'y trouve, jusqu'à ce que la compression impulsive cesse,
**caractérisé en ce qu'**entre ladite première cellule (9) dudit espace intérieur et ladite deuxième chambre (7) dudit cylindre (2), il y a au moins une deuxième soupape unidirectionnelle (16) qui fait face à au moins un deuxième orifice de transfert respectif (17) défini sur une paroi latérale dudit piston (3), ladite soupape (16) comprenant au moins un canal limitant le débit (18),
et **en ce que** ladite au moins une deuxième soupape (16) comprend un élément principal qui se déplace le long de la tête d'étanchéité (4) à proximité de la paroi latérale extérieure dudit piston (3), ledit élément principal pouvant être déplacé entre une première position de butée contre ladite paroi latérale dudit piston (3), dans laquelle il bloque lesdits seconds orifices de transfert (17) et le débit de fluide de travail (L) depuis ladite première cellule (9) vers ladite seconde chambre (7) n'est possible que par ledit canal de limitation (18), et une deuxième position à une distance prédéfinie de ladite paroi latérale dudit piston (3), dans laquelle lesdits seconds orifices de transfert (17) sont libres et le débit du fluide de travail s'effectue à travers ceux-ci depuis ladite première cellule (9) vers ladite deuxième chambre (7) et vice versa.

2. L'amortisseur selon la revendication 1, **caractérisé en ce que** ladite au moins une première soupape (11) comprend un corps principal qui se déplace le long de la surface intérieure dudit espace à proximité de la tête d'étanchéité (4), ledit corps principal pouvant coulisser entre une première position de butée contre une paroi d'extrémité de ladite tête d'étanchéité (4), dans laquelle il bloque lesdits orifices de transfert (12) et le débit du fluide de travail (L) de ladite première cellule (9) vers ladite première chambre (6) n'est possible que par ledit trou de limitation (13), et une deuxième position à une distance prédéfinie de ladite paroi d'extrémité de ladite tête (4), dans laquelle les orifices de transfert (12) sont libres et le débit du fluide de travail (L) s'effectue à travers ceux-ci de ladite première cellule (9) vers ladite première chambre (6) et vice versa.

3. L'amortisseur selon la revendication 1, **caractérisé en ce que** ledit au moins un trou limitant le débit (13) est constitué par au moins un canal traversant qui est calibré sur le corps de ladite au moins une première soupape (11) pour le passage d'un débit maximal prédéfini dudit fluide de travail (L) de ladite première chambre (6) vers ladite première cellule (9).

4. Amortisseur selon la revendication 1, **caractérisé en ce que** ledit cylindre (2) comprend, le long de sa surface latérale, au moins une première ouverture traversante (20) au niveau de ladite première chambre (6) et une deuxième ouverture traversante (21) au niveau de ladite deuxième chambre (7), ladite première ouverture (20) et ladite deuxième ouverture (21) étant couplées à des composants choisis parmi des bouchons d'arrêt (22, 23) et des conduits d'un circuit hydraulique externe.

5. Amortisseur selon la revendication 4, **caractérisé en ce que** ledit circuit hydraulique externe comprend un réservoir de fluide de travail (L) et au moins une pompe pour le transport du fluide de travail (L), à travers les conduits respectifs, dans lesdites chambres (6, 7) dudit cylindre (2), ladite pompe étant commandée par une unité de commande et de gestion respective pour la commande automatique dudit transport du fluide de travail (L), avec ajustement consécutif, discret ou continu, de l'excursion et de la position d'équilibre dudit amortisseur (1).

6. L'amortisseur selon la revendication 1, **caractérisé en ce que** sur la paroi d'extrémité de ladite deuxième cellule (10) dudit espace intérieur dudit piston (3) se trouve un conduit de passage (24) pour ledit gaz (G) pour le réglage de la pression dudit gaz (G) dans ladite deuxième cellule (10).

7. Amortisseur selon la revendication 6, **caractérisé en ce que** ledit piston (3) comprend un bouchon d'extrémité (25) pour une fermeture hermétique qui définit ladite paroi d'extrémité, ledit conduit de passage (24) étant défini à l'intérieur dudit bouchon d'extrémité (25) et comprenant au moins un élément (26) pour la fermeture hermétique respective.

8. Amortisseur selon une ou plusieurs des revendications précédentes, **caractérisé en ce qu'**il comprend une unité de commande et de gestion qui est connectée à :
- des capteurs respectifs pour surveiller la surface de la route,
- au moins un compresseur pour le réglage de la pression du gaz (G) dans ladite deuxième cellule (10),
- au moins une pompe pour le réglage de la quantité instantanée de fluide de travail (L) présente dans ladite première chambre (6) et dans ladite deuxième chambre (7),
ladite unité de commande et de gestion réglant la pression dudit gaz (G) dans ladite deuxième cellule (10) et la quantité de fluide de travail (L) dans lesdites chambres (6, 7) en fonction des signaux détectés par lesdits capteurs de surveillance de la surface de la route, pour le réglage prédictif de la course, de la réponse élastique et de l'amortissement dudit amortisseur (1).
